# EUROPÄISCHE PATENTANMELDUNG

(11) **EP 2 932 853 A1**
(43) Veröffentlichungstag der Anmeldung: **21.10.2015**
(21) Anmeldenummer: 14164728.9
(22) Anmeldetag: 15.04.2014
(51) Int. Cl.: A21D 13/00, B65D 65/46, A23P 1/08

(54) **Backware umfassend ein essbares Substrat, auf welches mindestens eine essbare Farbe aufgebracht ist**

(71) Anmelder: Basler, Jürgen, 63739 Aschaffenburg (DE)
(72) Erfinder: Basler, Jürgen, 63739 Aschaffenburg (DE)
(74) Vertreter: Fuchs Patentanwälte Partnerschaft mbB

(57) **Zusammenfassung**

Die vorliegende Erfindung betrifft Backwaren, insbesondere Brot und Brötchen, Teigwaren aus Hefeteigen, Mürbeteigen, tourierten Teigen und sonstigen Teigen, die ein essbares Substrat umfassen, auf welches Substrat mindestens eine essbare Farbe aufgebracht ist. Das eingefärbte und vorzugsweise bedruckte Substrat ermöglicht vielseitigen Einsatz der erfindungsgemäßen Backwaren.

## Beschreibung

Die vorliegende Erfindung betrifft Backwaren, insbesondere Brot und Brötchen, Teigwaren aus Hefeteigen, Mürbeteigen, tourierten Teigen und sonstigen Teigen, die ein essbares Substrat umfassen, auf welches Substrat mindestens eine essbare Farbe aufgebracht ist. Das eingefärbte und vorzugsweise bedruckte Substrat ermöglicht vielseitigen Einsatz der erfindungsgemäßen Backwaren.

Das Konzept "Überraschungs-Ei" ist fast jedem Verbraucher bekannt und wird in der DE 2 324 344 beschrieben. Es wird ein Schokoladenei offenbart, das als Kinder-Überraschungsei bekannt ist, wobei ein Hohlkörper aus Schokolade beansprucht wird, der einen mindestens zweiteiligen Behälter einschließt, in dem wiederum Kleinspielzeug enthalten ist. Der Aspekt, dass alle Komponenten verzehrbar sein sollen, wird hier nicht adressiert.

EP 0 774 209 A1 offenbart einen Beutel, eine Tasche oder einen ähnlichen Behälter in der Form von z.B. einem Kissen oder Polyeder, welche u.a. aus fetthaltigem Konditorwarenmaterial hergestellt werden können, wobei diese Behälter auch gefüllt sein können. Die Füllung kann nicht essbar, insbesondere aus Kunststoff, sein. Eine Backware, die gänzlich essbar ist, wird nicht beschrieben.

EP 0 768 039 A1 offenbart eine Lebensmittelverpackung, umfassend zwei Halbschalen, wobei die eine Halbschale essbar und die andere Halbschale nicht essbar ist und wobei ein Zubehörteil, wie ein Spielzeug, in dieser Lebensmittelverpackung vorhanden sein kann.

DE 299 09 588 U1 offenbart eine 'Pfingstkugel', die sehr große Ähnlichkeit mit dem Kinder-Überraschungsei hat, wobei hier aber von Inhalten berichtet wird, die verschieden von Kinderspielzeug sein können, jedenfalls aber nicht essbar sind.

US 7,144,010 und US 3,770,278 offenbaren Glückskekse, also Teigwaren, als essbare Behältnisse für bedrucktes Papier, wobei diese Papiere zu unterschiedlichen Zwecken dienen können. Es ist weder beschrieben noch vorgesehen, dass das bedruckte Papier verzehrt werden kann.

DE 296 10 098 U1 und DE 188 208 offenbaren essbare Hohlkörper (bzw. Herstellungsverfahren dafür), welche als Behälter für nicht essbare Gegenstände verwendet werden können.

Es besteht Bedarf ein alltägliches Nahrungsmittel bereitzustellen, welches durch einen Anreiz vom Verbraucher bevorzugt gekauft und gegessen wird, dabei in seiner Gesamtheit essbar und somit unbedenklich ist. Dies ist insbesondere im Bereich der massenhaft angebotenen Backwaren, wie insbesondere Brötchen, sowohl für den Bäcker als auch den Verbraucher von Vorteil. Denn die Möglichkeit, etwas zu gewinnen und/oder zu sammeln, erhöht die Bereitschaft des Verbrauchers für eine Backware einen höheren Preis zu bezahlen, was wiederum dem Bäcker Gelegenheit gibt, hochwertigere Teige zu verarbeiten.

Die Aufgabe der Erfindung wird durch die Gegenstände der Patentansprüche gelöst. Insbesondere ist die vorliegende Erfindung eine Backware, die ein essbares Substrat umfasst, auf welches Substrat mindestens eine essbare Farbe aufgebracht ist. Das Substrat kann ganz von der Backware umschlossen sein. Es ist auch möglich, dass das Substrat an mindestens einer Stelle aus der Backware heraus ragt, so dass das Substrat und die Backware ohne Hilfsmittel, d.h. mit bloßen Händen, voneinander getrennt werden können. Sämtliche Bestandteile des mit Farbe versehenen Substrates sind Lebensmittel und/oder Lebensmittelzusatzstoffe.

Die erfindungsgemäßen Backwaren eignen sich beispielsweise als flexibles Werbemittel für verschiedenste Unternehmen. Die erfindungsgemäßen Backwaren können auch als Vehikel für Lose sein. Oder für Sammler verschiedener Objekte, wobei die Substrate dann vorzugsweise mit einem QR-Code versehen sind, welcher den Abruf eines Gewinns oder Sammlerstücks über das weltweite Netz (worldwide web oder WWW) ermöglicht. Insbesondere im Bereich des Sports können so Sticker gesammelt, Karten verlost werden und vieles mehr.

Die erfindungsgemäßen Backwaren, umfassend das Substrat, sind aus lebensmittelrechtlicher Sicht unbedenklich. Sämtliche Komponenten können bedenkenlos verzehrt werden, ohne dem menschlichen oder tierischen Organismus Schaden zuzufügen.

Die erfindungsgemäßen Backwaren sind vielseitig und flexibel einsetzbar. Die erfindungsgemäßen Backwaren bieten viele und verschiedene Vorteile sowohl für den Bäcker als auch den Verbraucher. Denn die Möglichkeit, etwas zu gewinnen und/oder zu sammeln, erhöht die Bereitschaft des Verbrauchers für eine Backware einen höheren Preis zu bezahlen, was wiederum dem Bäcker Gelegenheit gibt, hochwertigere Teige zu verarbeiten. Dabei können die Preise für hochwertige Backwaren beispielsweise deshalb noch in einem vertretbaren Rahmen bleiben, weil der Bäcker oder Endverkäufer des Brötchens einen Anteil am Mehrpreis, der sich durch eine mögliche Quersubventionierung durch denjenigen ergibt, der die Backware als Webemittel einsetzen kann, an den Verbraucher weitergeben kann. Es ist aber auch denkbar, dass ein Bäcker selbst mit möglichen Gewinnen wirbt. Zum Beispiel "7 Tage lang jeden Morgen ein Brötchen kostenlos". Oder Gewinn einer anderen Backware. Oder Gewinn eines Gutscheins. Ein Gutschein kann ganz flexibel gestaltet sein und kann verschiedenen Mottos folgen. Wie Gewinn ist eine Backware nach Wunsch ausgeformt für den nächsten Kindergeburtstag. Oder eine Freifahrt auf dem Rummelplatz.

Der Fantasie sind keine Grenzen gesetzt und die Mottos können jeden Tag oder wöchentlich oder in anderen Zeiträumen wechseln. Für die Chance, einen Gewinn zu erhalten, wird der Verbraucher bereit sein, etliche Cent mehr für ein Brötchen zu zahlen. Was dem Bäcker, sorgt er selbst für die Lose und Gewinne, direkt zu Gute kommt. Die große Flexibilität der erfindungsgemäßen Backwaren kann beispielsweise dadurch zum Ausdruck kommen, dass ein Substrat einfach in verschiedenen Farben eingefärbt ist, wobei jede Farbe für einen anderen Gewinn oder eben keinen Gewinn steht. Das würde Verfahren zum Aufbringen eines klassischen Drucks mit bedruckten und unbedruckten Bereichen umgehen und das mit Farbe versehene Substrat kostengünstig herstellbar machen.

Der Begriff Lebensmittel wird erfindungsgemäß wie folgt verstanden: Ein Lebensmittel ist ein Lebensmittel im Sinne der am Anmeldetag geltenden EU Verordnung. Ebenso sind Lebensmittelzusatzstoffe Lebensmittelzusatzstoffe im Sinne der am Anmeldetag geltenden EU Verordnung. Laut der zuvor genannten Verordnung sind Lebensmittel alle Stoffe oder Erzeugnisse, die dazu bestimmt sind, oder von denen nach vernünftigem Ermessen erwartet werden kann, dass sie in verarbeitetem, teilweise verarbeitetem oder unverarbeitetem Zustand von Menschen aufgenommen werden können. Lebensmittelzusatzstoffe sind laut der genannten Verordnung Stoffe mit oder ohne Nährwert, die in der Regel weder selbst als Lebensmittel verzehrt noch als charakteristische Lebensmittelzutat verwendet werden, und einem Lebensmittel aus technologischen Gründen bei der Herstellung, Verarbeitung, Zubereitung, Behandlung, Verpackung, Beförderung oder Lagerung zugesetzt werden, wodurch sie selbst oder ihre Nebenprodukte mittelbar oder unmittelbar zu einem Bestandteil des Lebensmittels werden oder werden können.

Der Begriff "umfassend eine essbare Farbe" umfasst erfindungsgemäß jedwede Art und Weise, Farbe auf das essbare Substrat aufzubringen. Es kann durch Druckverfahren aber auch anders bewerkstelligt werden, wie Auftragung mittels Pinsel oder anderen Mitteln. Das Substrat kann, wie oben beschrieben, unifarben sein.

### Mittel zum Bedrucken des Substrates:

Je nach Substrat wird der Fachmann ein geeignetes Verfahren wählen, um das Substrat mit Farbe zu versehen und insbesondere zu bedrucken. Beispielsweise kann dafür eine Druckfarbe gewählt werden. Essbare Farben, die sich für einen Offsetdruck eignen, sind in der DE 102012103825 A1 beschreiben. Derartige Offsetdruckfarben zeichnen sich dadurch aus, dass sämtliche Bestandteile der Offsetdruckfarbe entweder Lebensmittel im Sinne der am Anmeldetag geltenden EU Verordnung oder Lebensmittelzusatzstoffe im Sinne der am Anmeldetag geltenden EU Verordnung sind. Diese sind für den menschlichen Verzehr vorgesehen und geeignet und deren gesundheitliche Unbedenklichkeit, zumindest innerhalb bestimmter Mengen, steht außer Frage.

Es ist möglich Lebensmittel direkt im Offsetverfahren zu bedrucken, z.B. dünne Teigoblaten, die auch als Esspapier bekannt sind.

Der Fachmann wird sämtliche lebensmittelgeeigneten Farben berücksichtigen und damit auch alle denkbaren Verfahren, diese Farben auf ein Substrat aufzubringen, wie mit einem Roller, Pinsel, durch Siebdruck oder in anderer Weise.

### Backwaren und deren Teige:

Erfindungsgemäß soll der Begriff Backwaren weit ausgelegt werden. Er umfasst beispielsweise, jedoch nicht abschließend, Brötchen, Brezeln, Baguette, Waren aus Blätter- und Plunderteigen, Waren aus Mürbeteigen, Waren aus Hefeteig, wie Kreppel (Berliner) und Donuts, Waren aus Mürbeteig, tourierten Teigen und sonstigen Teigen. Auch umfasst ist Brot, insbesondere Körner-, Vollkorn- und Biobrot, wobei vorzugsweise die Größe des Laibs bis zu 1500 Gramm, weiter bevorzugt bis zu 1000 Gramm, noch weiter bevorzugt bis zu 500 Gramm beträgt. Der Fachmann wird gemäß seinem Fachwissen für die verschiedenen Teige auch fertige Backmischungen verwenden oder möglicherweise Teige in der Form einer vorgefertigten Backware heranziehen.

Gemäß einer bevorzugten Ausführungsform betrifft die vorliegende Erfindung Brötchen, welche mindestens Weizenmehl und/oder Roggenmehl, Salz, Hefe, Wasser und Hefe oder Sauerteig umfassen. Oder an Stelle von Sauerteig wahlweise ein anderes teigsäuerndes Backmittel.

Ferner kann es sinnvoll sein, dem Teig der erfindungsgemäßen Backwaren weitere Substanzen zuzusetzen, wobei beispielsweise die folgenden genannt werden: Aminosäuren, Anis, Arnika, Baldrian, Bärlauch, Folsäure, Ginseng, Glutamin, Glutathion, Hafer, Hanf, Hirse, Hopfen, Magnesium, Mariendistel, Melisse, Menthol, Rosmarin, Salbei, Sanddorn, Schafgarbe, Selen, Sesam, Soja, Spitzwegerich, Brennnessel, Calzium, Chitosan, Chrom, Coenzym Q10, DHEA, Dinkel, Distel, Echinacea, Eisen, ausgesuchte Enzyme, Flohsamen, Ingwer, Jasmin, Jod, Johanniskraut, Kakaobutter, Kalium, Kamille, Kardamom, Kieselerde, Knoblauch, Koriander, Kürbiskernöl, Lachsöl, L-Cystein, Lecithin, Molybdän, Nachtkerzenöl, Oregano, Passiflora, Petersilie, Pfefferminze, Pyruvat, Ribose, Ringelblume, Teebaumöl, Thymian, Topinambur, Vanadium, verschiedene Vitamine, Weihrauch, Wermut, Xylitol, Zeolithe, Zimt und Zink. Wobei es sich bei den Vitaminen um Vitamin A, ein Vitamin des B-Komplexes, Vitamin C, Vitamin D, Vitamin E oder Vitamin K handeln kann.

Gemäß einer erfindungsgemäßen Ausführungsform nimmt die Backware eine bestimmte Gestalt an. Wie beispielsweise die Form eines Fußballs. Dazu werden die Backwaren in entsprechenden Formen gebacken. Es sind alle technisch machbaren Gestaltungen denkbar.

### Das Substrat:

Geeignet sind beispielsweise Oblaten (Esspapier). Diese werden aus einer flüssigen Masse hergestellt, die Wasser, Mehl und Stärke umfasst und vorzugsweise ausschließlich aus diesen Komponenten besteht Die Masse wird beispielsweise zwischen heißen Eisen gebacken und dann in Stücke zerteilt. Der Fachmann wird die Dicke und Größe jeweils für die angedachte Backware entsprechend auswählen.

Es sind auch andere essbare Massen denkbar. Beispielsweise kennt der Fachmann essbare Polysaccharide in der Form von, beispielsweise, Pullulan-Folien. Auch Cellulose kann als Basis für essbare Massen dienen, verarbeitet mit Polysacchariden oder Polypeptiden, wie in der DE 3690798 beschrieben.

Gemäß ganz bevorzugten Ausführungsformen kann das essbare Substrat noch mit einem essbaren Überzug versehen sein. Üblicherweise wird dann das Substrat zunächst bedruckt und dann mit dem Überzug versehen. Solche Überzüge können aus Hydroxypropylmethylcellulose (HPMC) bestehen, also einer synthetischen Cellulose. Gängig auch Ethylcellulose, Methylcellulose, Polyvinylpyrrolidon und Polydextrose.

### Beispiel1 :

In Zusammenarbeit mit einem Hersteller von PKWs wird die Verlosung eines Sondermodelles gestartet. Neben dem Hauptgewinn können die Teilnehmer der Verlosung andere nützliche Gegenstände, wie beispielsweise Schlüsselanhänger, gewinnen.

Dazu wird ein Esspapier mit dem Logo des Autoherstellers versehen und der dem Los zugeordnete Gewinn auf dem Papier versehen.

Dem Bäcker werden eine zuvor bestimmte Anzahl der bedruckten Substrate ausgehändigt.

Diese werden zu Rollen geformt und derartig in den Teig eines Brötchens, beispielsweise aus Weizenmehl, eingebracht, dass beide Enden des zusammengerollten Substrates aus dem Brötchen herausragen.

Danach wird das Brötchen gebacken.

Der Verbraucher kann das Los auch nach dem Backen aus dem Brötchen heraus ziehen. Der Verzehr der Brötchen ist damit von der Entgegennahme und Begutachtung der Lose unabhängig.

### Beispiels 2:

Während eines Sportereignisses verlost der Bäcker Eintrittskarten für ebendieses Ereignis.

Dazu wird Esspapier mit einem QR-Code durch Aufdruck versehen. Der Code führt den Verbraucher auf eine Plattform im WWW, über die er sich über seinen Gewinn und wie dieser abzuholen ist, informieren kann.

Dazu wird zunächst das Esspapier bedruckt und zweifach gefaltet.

Es wird ein Teig hergestellt und das gefaltete Esspapier mittig in eine Teigkugel eingebracht.

Die Teigkugel wird mittels einer bestimmten Form zu einer Teigware gebacken, die beispielsweise die Gestalt eines Fußballs einnimmt.

Bei dieser Ausgestaltungsform ragt das Esspapier nicht aus der Teigware heraus.

Vielmehr wird der Verbraucher erst bei Verzehr, beispielsweise beim Aufschneiden der Teigware mit einem Messer, das Esspapier vorfinden, herausnehmen und sich über seinen Gewinn informieren.

### Beispiel 3:

Der Bäcker selbst verlost Bäckereiwaren.

Dazu werden Substrate gänzlich mittels verschiedener Farben eingefärbt.

Der Bäcker bestimmt eine Farbe für eine Niete und andere Farben für Incentives, wie einige Tage kostenlos Brötchen, ein kostenloses Brot, ein kostenloses Backwerk, möglicherweise ein individuell gestaltetes Backwerk nach Wunsch. Die Legende zu den Farben und Gewinnen hängt der Bäcker in der Bäckerei aus.

Die unifarbenen Substrate werden vor dem Backen in geeigneter Form (gerollt, gefaltet oä) in die Backware eingebracht. Bei diesem Konzept ist es wichtig, dass kein Teil des Substrates aus der Backware heraus ragt.

Die Backware wird gebacken und in den Verkauf gebracht. Möglicherweise hat die Backware eine Art Sollbruchstelle, so dass der Verbraucher sich vor Ort in der Bäckerei schon über einen möglichen Gewinn informieren kann. Alternativ dazu bringt der Verbraucher das Substrat in die Bäckerei und erhält dann seinen Gewinn.

## Patentansprüche

1. Backware umfassend einen Teig und ferner ein essbares Substrat, auf welches eine essbare Farbe aufgebracht ist.

2. Backware nach Anspruch 1, wobei das Substrat bedruckt ist.

3. Backware nach Anspruch 1 oder 2, wobei das Substrat an mindestens einer Seite aus der Backware heraus ragt, so dass das Substrat und die Backware ohne Hilfsmittel voneinander getrennt werden können.

4. Backware nach einem oder mehreren der vorhergehenden Ansprüche wobei es sich um Brötchen, Brezeln, Baguette, Waren aus Blätter- und Plunderteigen, Waren aus Mürbeteigen, Waren aus Hefeteig, wie Kreppel (Berliner) und Donuts, Waren aus Mürbeteig, tourierten Teigen und sonstigen Teigen oder Brot handelt.

5. Backware nach einem oder mehreren der vorhergehenden Ansprüche, wobei das essbare Substrat ausgewählt ist aus Esspapier, essbaren Polysacchariden oder Cellulose, verarbeitet mit Polysacchariden oder Polypeptiden.

6. Backware nach einem oder mehreren der vorhergehenden Ansprüche, wobei das bedruckte Substrat ferner noch mit einem essbaren Überzug versehen ist.

7. Backware nach Anspruch 6, wobei der essbare Überzug ein synthetisches Cellulosepolymer ist.

8. Backware nach einem oder mehreren der vorhergehenden Ansprüche, wobei die Backware die folgenden Bestandteile umfasst:
- Weizenmehl
- Salz
- Hefe
- Wasser
- ein teigsäuerndes Mittel oder eine Sauerteigart
- und wahlweise Roggenmehl.

9. Verfahren zur Herstellung einer Backware, umfassen die folgenden Schritte:
- Bereitstellen eines Teiges
- Ausformen der Backware
- Einbringen eines essbaren Substrates, das mindestens eine essbare Farbe umfasst,
- wobei optional mindestens ein Ende des Substrates aus dem Teig heraus ragt
- Backen der Backware, wobei optional die Backware in einer Backform gebackten wird, die es erlaubt, der Backware eine definierte Gestalt zu geben.

## Geänderte Patentansprüche

### Geänderte Patentansprüche gemäss Regel 137(2) EPÜ.

1. Backware umfassend einen Teig und ferner ein essbares Substrat, auf welches eine essbare Farbe aufgebracht ist, wobei das Substrat an mindestens einer Stelle aus der Backware herausragt, so dass das Substrat und die Backware ohne Hilfsmittel, d.h. mit bloßen Händen, voneinander getrennt werden können.

2. Backware nach Anspruch 1, wobei das Substrat bedruckt ist.

3. Backware nach einem oder mehreren der vorhergehenden Ansprüche wobei es sich um Brötchen, Brezeln, Baguette, Waren aus Blätter- und Plunderteigen, Waren aus Mürbeteigen, Waren aus Hefeteig, wie Kreppel (Berliner) und Donuts, Waren aus Mürbeteig, tourierten Teigen und sonstigen Teigen oder Brot handelt.

4. Backware nach einem oder mehreren der vorhergehenden Ansprüche, wobei das essbare Substrat ausgewählt ist aus Esspapier, essbaren Polysacchariden oder Cellulose, verarbeitet mit Polysacchariden oder Polypeptiden.

5. Backware nach einem oder mehreren der vorhergehenden Ansprüche, wobei das bedruckte Substrat ferner noch mit einem essbaren Überzug versehen ist.

6. Backware nach Anspruch 5, wobei der essbare Überzug ein synthetisches Cellulosepolymer ist.

7. Backware nach einem oder mehreren der vorhergehenden Ansprüche, wobei die Backware die folgenden Bestandteile umfasst:
- Weizenmehl
- Salz
- Hefe
- Wasser
- ein teigsäuerndes Mittel oder eine Sauerteigart
- und wahlweise Roggenmehl.

8. Verfahren zur Herstellung einer Backware, umfassen die folgenden Schritte:
- Bereitstellen eines Teiges
- Ausformen der Backware
- Einbringen eines essbaren Substrates, das mindestens eine essbare Farbe umfasst,
- wobei mindestens ein Ende des Substrates aus dem Teig heraus ragt
- Backen der Backware, wobei optional die Backware in einer Backform gebackten wird, die es erlaubt, der Backware eine definierte Gestalt zu geben.
